(19) Europäisches Patentamt / European Patent Office / Office européen des brevets

(11) **EP 4 570 142 B1**

(12) **EUROPEAN PATENT SPECIFICATION**

(45) Date of publication and mention
of the grant of the patent:
**10.12.2025 Bulletin 2025/50**

(21) Application number: **24218121.2**

(22) Date of filing: **06.12.2024**

(51) International Patent Classification (IPC):
**A47J 31/42** *(2006.01)* **A47J 31/52** *(2006.01)*

(52) Cooperative Patent Classification (CPC):
**A47J 31/42; A47J 31/525**

(54) **AUTOMATIC ADJUSTMENT OF THE QUANTITY OF A GROUND PRODUCT IN AN AUTOMATIC BEVERAGE PREPARATION MACHINE WITH INTEGRATED GRINDER**

AUTOMATISCHE EINSTELLUNG DER MENGE EINES GEMAHLENEN PRODUKTS IN EINER AUTOMATISCHEN GETRÄNKEHERSTELLUNGSMASCHINE MIT INTEGRIERTER MAHLVORRICHTUNG

RÉGLAGE AUTOMATIQUE DE LA QUANTITÉ D'UN PRODUIT MOULU DANS UNE MACHINE DE PRÉPARATION DE BOISSONS AUTOMATIQUE AVEC BROYEUR INTÉGRÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.12.2023 IT 202300026520**

(43) Date of publication of application:
**18.06.2025 Bulletin 2025/25**

(73) Proprietor: **EVOCA S.p.A.**
**24030 Valbrembo (BG) (IT)**

(72) Inventor: **ZONATO, Alberto**
**24030 VALBREMBO (BG) (IT)**

(74) Representative: **Studio Torta S.p.A.**
**Via Viotti, 9**
**10121 Torino (IT)**

(56) References cited:
**WO-A1-2008/105017    WO-A1-2022/133538**
**WO-A1-2023/126988    US-A1- 2021 030 195**

Description

## TECHNICAL FIELD OF THE INVENTION

The invention relates in general to automatic beverage preparation machines.

More in particular, the invention relates to automatic adjustment of an amount of a ground product in an automatic beverage preparation machine with an integrated grinder for the accurate dosing of the amount of ground product delivered to a brewing assembly in each brewing cycle for the preparation of a beverage starting from the ground product, in particular by brewing.

The invention advantageously, though not exclusively, applies to automatic coffee machines with integrated coffee grinders for automatically dosing and adjusting an amount of ground coffee dispensed to a brewing assembly in each brewing cycle for the preparation of a coffee beverage starting from ground coffee, to which explicit reference will be made in the following description without for this reason lacking generality.

Indeed, the invention could be applied to the automatic adjustment of an amount of a ground product obtained by grinding a product in beans or gains, leaves or other forms in an automatic coffee machine with an integrated coffee grinder.

## BACKGROUND OF THE INVENTION

In automatic coffee machines, in particular for domestic or professional use, it is necessary to accurately dose the amount of coffee powder delivered to a brewing assembly in each brewing cycle.

In most advanced automatic coffee machines, coffee is loaded in beans and a coffee grinder integrated in the coffee machine grinds a predetermined amount of coffee beans to produce an amount of ground coffee suitable for producing the coffee beverage selected by the user.

The amount of ground coffee can be adjusted according to the following logics, which can be implemented individually or in combination:

- fixed time, according to which the coffee grinder is operated for an amount of time that is fixed or differentiated depending on the intensity of the aroma of the selected coffee beverage or the set grind size;
- fixed number of revolutions, according to which the coffee grinder is operated for a number of revolutions that is fixed or differentiated depending on the intensity of the aroma of the selected coffee beverage;
- fixed volume, according to which the coffee grinder is operated to fill a pre-load chamber with a volume that is fixed or differentiated depending on the intensity of the aroma of the selected beverage or on a manual setting of the user; and
- based on a feedback of an electric current absorbed by the electric actuator that closes the brewing assembly and compresses the ground coffee contained therein, which is indicative of an effort made by the electric actuator to carry out these tasks and allows the time or the number of revolutions of the grinder of the following grinding to be adjusted as a function of pre-set current thresholds that are differentiated based on the aroma intensity level of the selected beverage.

To these logics, an initial grinding calibration step can be added to identify the correlation between grinding time and the amount of ground coffee.

Some automatic coffee machines also entail the possibility for the user of modifying the amount of ground coffee within given limits to produce a more or less strong coffee beverage.

However, these logics have limitations,

- fixed time/number of revolutions or differentiated time/number of revolutions depending on the intensity of the aroma of the selected coffee beverage: they are easier to implement and often do not require additional components, but they do not ensure direct control over the amount of ground coffee unless a grinding calibration is performed and they do not feature a feedback control to vary the settings. They fail to compensate for the variability of the loaded coffee or the set grind size (which, in turn, affects the flow rate of ground powder). By not having direct control over the amount of ground coffee, situations could arise in which an excessive amount of ground coffee is dispensed and, therefore, the brewing assembly is not able to close correctly or an excessive stress is exerted upon the components. Vice versa, cases could occur in which the amount of ground coffee is too scarce, with a consequent dispensing of the coffee beverage that is poor from a qualitative point of view, especially as a result of the wear of the components, such as, for example, the grinders. In addition, the yield, provided that all other parameters are the same, can vary depending on the type of coffee used;
- fixed volume or differentiated volume based on the intensity of the aroma of the coffee beverage: they permit direct control of the volume and, therefore, of the amount of ground coffee, however they require the use of additional components, such as a volumetric pre-load chamber and a system for varying the volume thereof (optional) and a system for discharging the exhausted ground coffee from the pre-load chamber to the brewing assembly. Furthermore, they do not allow the amount of ground coffee to be adjusted based on the characteristics thereof (grind size, presence of impalpable, etc.) or on the operating variability of the components, except by manually acting upon the volume adjustment systems of the pre-load chamber, an operation that is often difficult and that makes it necessary to «waste» a given amount of coffee powder to set the system;

- with feedback of electric current absorbed by the electric actuator that operates the brewing assembly: in this case, the disturbing elements of the control are the difficulty of defining fixed thresholds upon variation of the wear of the components and gaskets or upon variation of the greasing conditions of the brewing assembly that could decisively change inner frictions and, hence, the stress detected by the sensor; moreover, this measurement is better suited for brewing assemblies with a variable chamber, less so for assemblies with a fixed chamber, since only in the first case there is a stress that is always proportional to the amount of ground coffee, whereas in the second case gradually greater stress values are recorded, compared to the simple closing stress with an empty brewing chamber (e.g. during a rinsing cycle), only close to the conditions of complete filling of the brewing chamber. For these reasons, the behaviour is preferably stabilized by averaging it among several dispensing actions.

An example of these logics is disclosed in US 4,659,023 A, in which the amount of ground coffee is determined based on the pressure exerted upon a sensor by the ground coffee from the grinder.

US 5,492,054 A discloses a different coffee measuring system with a regulator of the amount of coffee powder as a function of the amount of the beverage to be produced.

These measuring systems are rather complex, in particular due to the need to use complex and non-precise sensors, as well as devices cooperating therewith to determine the amount of ground powder.

In most modern coffee machines, the amount of ground coffee for each brewing cycle is determined based on the number of revolutions of the mills of the grinder or, equivalently, the number of revolutions of the motor that rotate the grinders. Since the amount of ground coffee is proportional to the number of revolutions of the grinders, the latter is used as a parameter that is directly proportional to the amount of ground coffee that is dispensed into the brewing chamber.

The number of revolutions of the grinders can therefore be simply and reliably determined with a significant degree of precision with low-cost and robust sensors. For example, it is possible to use an encoder coupled to the shaft of the motor that operates the mills or a capacitive, magnetic or other sensor, which counts the number of revolutions or fractions of revolution of the mills by detecting the passage of reference notches thereon at an appropriate angular distance, as a function of the resolution desired in determining the amount of ground coffee.

However, this particularly simple and reliable system has the drawback of a poor precision and inconsistency in the measurement of the amount of ground coffee. Indeed, this system for determining the amount of ground coffee is affected by factors such as the adjustment of the distance of the mills of the grinder, the type of coffee beans in the loading hopper of the machine, the supply voltage of the coffee machine, the state of wear of the mills of the grinder, the amount of coffee beans in the bean container at the time of grinding, the temperature and humidity, the environment and the number of revolutions of the mills.

Of these parameters, only the last one can be accurately controlled in the aforementioned manner with a dedicated sensor. The other factors modify in an unpredictable manner the correlation between the number of revolutions of the mills and the amount of ground coffee obtained. Furthermore, as mentioned above, with regard to the mills, there are coffee machines with a fixed setting and others with a variable setting, in which the user can act within a given margin by changing the distance between the mills, in order to vary the size of the ground coffee and, hence, the organoleptic characteristics of the coffee beverage prepared therefrom. This makes the measurement of the amount of ground coffee through the number of revolutions of the mills even more subject to errors. The system further has a certain instability over time with a deviation of the ground coffee by weight with respect to the factory setting.

If the amount of ground coffee for each brewing cycle decreases, a high dispensing speed is obtained due to the reduced pressure drop that the water coming from the boiler of the coffee machine undergoes by flowing through the compressed ground coffee in the brewing chamber and this results in a poor quality of the coffee beverage. Vice versa, if the tendency over time is to increase the amount of ground coffee with respect to the factory set value, there is a risk that the coffee machine is no longer able to operate due to the intervention of the over-stress control on the closing actuator of the brewing chamber. This control is set in such a way as to abort the brewing cycle when the motor assembly that controls the closing of the brewing chamber exceeds a maximum absorption limit, indicating that excessive resistance is encountered in the closing of the brewing chamber, which may be due to the excess of ground coffee in the brewing chamber.

WO 2008/105017 A1 suggests adjusting the amount of ground coffee by first detecting, during at least part of its operation, at least one parameter of an electric actuator, whose operation causes the brewing chamber to be closed and the ground coffee therein to be compressed and whose value is a function of the amount of ground coffee that is compressed, and then by setting the amount of ground coffee to be dispensed in the next brewing cycle as a function of the detected parameter. The parameter detected is represented by the electric current absorbed by the electric actuator and is hence proportional to the electric power absorbed. The detected parameter permits a shortage or an excess of ground coffee to be identified with respect to a pre-set value, thus allowing users to intervene on the grinder to modify the amount of coffee that is dispensed during the next brewing cycle, thus obtaining an automatic adjustment of the amount of ground coffee dispensed to the pre-loading chamber.

WO 2008/142536 A1 discloses a device for grinding coffee beans provided with means for automatically adjusting the mutual distance between the mills based on a feedback control of the grind size of the ground coffee based on an electrical signal from a sensor designed to detect the relative distance between the mills.

US 2021/030195 A1 discloses an automatic beverage preparation machine comprising the features of the preamble of claim 1.

## OBJECT AND SUMMARY OF THE INVENTION

Therefore, the object of the invention is to provide an automatic coffee machine with automatic adjustment of the grinding time of the coffee beans for the accurate and stable measuring over time of a quantity of ground coffee dispensed to a brewing assembly at each brewing cycle, which at least partially overcomes the aforementioned drawbacks and is simple and economic to be manufactured.

According to the invention, there is provided an automatic coffee machine as claimed in the appended claims.

## BRIEF DESCRIPTION OF THE DRAWINGS

Figure 1 shows a block diagram of an automatic coffee machine with integrated coffee grinder.
Figure 2 shows a block diagram of a brewing assembly of the automatic coffee machine of Figure 1.
Figure 3 shows a flowchart of the operation of the automatic coffee machine of Figure 1.

## DETAILED DESCRIPTION OF EMBODIMENTS OF THE INVENTION

The invention will now be described in detail with reference to the accompanying figures, so as to allow a person skilled in the art to carry it out and use it. Possible changes to the embodiments described herein will be immediately evident to skilled people and the generic principles described herein can be applied to other embodiments and applications without for this reason going beyond the scope of protection of the invention as it is defined in the appended claims. Therefore, the invention cannot be considered as limited to the embodiments described and shown herein, but it has to be associated with the widest scope of protection possible in accordance with the features described and claimed herein.

All technical and scientific terms have the meaning commonly used by people ordinarily skilled in the industry to which the invention belongs. In case of conflict, the description - including the definitions provided therein - is binding. Furthermore, the examples are provided by mere way of explanation and, as such, should not be considered as limiting. The block diagrams included in the accompanying figures and described below should not be interpreted as representation of structural features, namely as constructive limits, but they should be regarded as representation of functional features, i.e. intrinsic properties of the devices defined by the obtained effects, namely as functional limits, which can be implemented in different manners, hence so as to protect the functionality thereof.

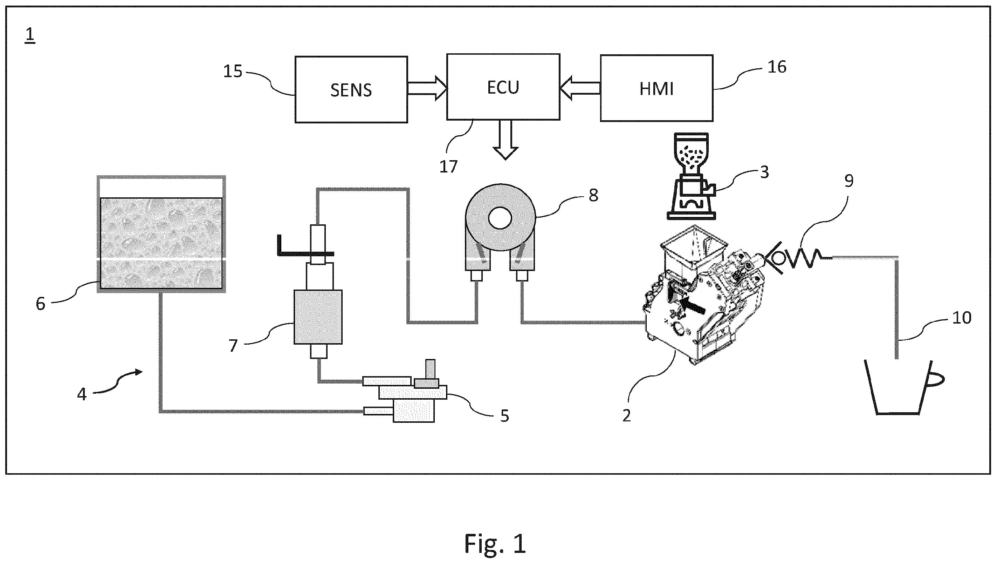

Figure 1 shows a block diagram of an automatic coffee machine referenced as a whole with reference numeral **1** and only the parts of which necessary for understanding the invention are depicted.

As shown in Figure 1, the automatic coffee machine **1** comprises one or several brewing assemblies **2,** only one of which is shown in Figure 1 for illustrative convenience, which are designed to carry out the same or different brewing processes on the same or different brewing substances, specifically ground coffee, with the same or different brewing liquids, specifically pressurized hot water, to produce the same or different beverages, specifically coffee beverages, in particular espresso, in identical or different quantities, for example short or long espressos, from a ground coffee of the same or different type in terms of coffee species (Arabica, Robusta), coffee blend, coffee grain size, treatment to which the coffee has been subjected, for example decaffeinated coffee, flavoured coffee, etc., and obtained by grinding a substance in beans, specifically coffee beans, contained in one or several coffee bean containers (not shown).

The automatic coffee machine **1** further comprises a grinder **3** operated by an electric actuator (not shown), typically a gearmotor, usually of the direct-current type, to grind coffee beans supplied to it from one of the coffee bean containers through a hopper (not shown) in order to produce a determined amount of ground coffee, which is then supplied to a brewing assembly **2.** By way of example, the grinder **3** can be of the type comprising a pair of mills(not shown), also called mill and counter-mill, which, in an embodiment, can be of the type having a flat development.

The automatic coffee machine **1** further comprises a hydraulic circuit **4** to supply each brewing assembly **2** with pressurized hot water necessary for preparing the espresso.

The hydraulic circuit **4** comprises:

- a water pump **7,** conveniently al electric variable-speed vibration pump, operable to suck cold water from a cold water source consisting, in the example shown herein, of a water tank **6** housed in, or external to and fluidly connected to, the automatic coffee machine **1;**
- a water flow meter **5,** which is fluidly located upstream of the water pump **7** to measure and output an electrical output indicative of the amount of water, measured by volume, supplied by the water pump **7;**
- a water heater **8,** conveniently of an electric type, which is fluidly located downstream of the water pump **7** to heat the cold water; and
- a back-pressure valve **9,** which is fluidly located between the outlet of the brewing assembly **2** and a beverage dispensing nozzle **10,** so as to generate a back-pressure such as to give rise to a desired flow rate of the dispensed coffee beverage.

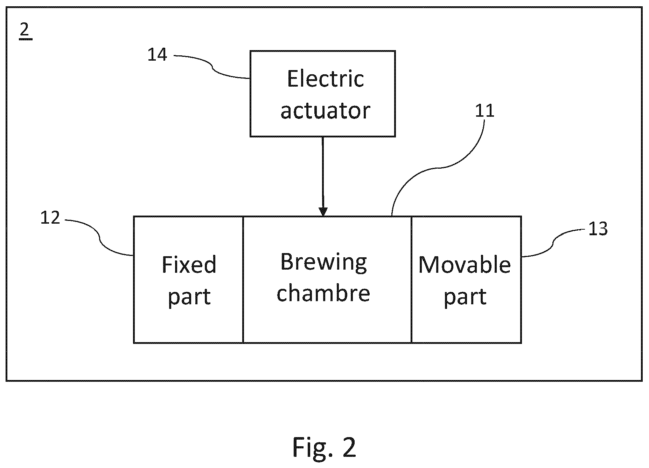

As shown in Figure 2, the brewing assembly **2** comprises a brewing chamber **11** so sized as to contain an amount of ground coffee for producing a coffee beverage and conveniently delimited by two mutually movable parts **12, 13;** and an electric actuator **14,** in particular an electric gearmotor, operable to mutually move the two parts **12, 13** of the brewing chamber **11** away from and towards one another so as to open the brewing chamber **11** to allow an amount of ground coffee necessary for producing the selected coffee beverage to be introduced therein and a compressed ground coffee cake to be extracted therefrom and to close the brewing chamber **11** and compress the amount of ground coffee contained therein.

In one embodiment, one of the two parts **12, 13** defining the brewing chamber **11** is a fixed part **12** and the other is a movable part **13** with respect to the fixed part **12,** and the movable part **13** is moved from a position close to the fixed part **12,** where it cooperates with the latter to close the brewing chamber **11** and compress the amount of ground coffee contained therein, and a position far from the fixed part **12,** where it allows the exhausted compressed ground coffee to be the extracted from the brewing chamber **11** after the production of the coffee beverage and other ground coffee for producing the following coffee beverage to be introduced therein.

In a known manner, and hence not described in detail, a given amount of pressurized hot water is supplied to the brewing chamber **11** of the brewing assembly **2** to produce a corresponding amount of a coffee beverage by brewing the ground coffee contained in the brewing chamber **11** and the beverage thus obtained is then dispensed into a cup through the beverage dispensing nozzle **10.**

With reference to Figure 1, again, the automatic coffee machine **1** further comprises:

- a sensory system **15** designed to detect and output electrical outputs indicative of several operating quantities of the automatic coffee machine **1;**
- a user interface **16** to allow a consumer to request a coffee beverage to be dispensed and to customise the selected coffee beverage, by selecting, for example, the amount of one or several additives contained therein, such as, for example, the amount of sugar or sweetener, etc., and/or organoleptic qualities thereof, in particular the level of intensity of the aroma, and by outputting an output indicative of the selections made by the consumer; and
- an electronic control unit **17,** typically of a microprocessor type, in communication with, in particular electrically connected to, the sensory system **15** and the user interface **16** to receive outputs thereof and to the brewing assembly **2,** the grinder **3** and the water pump **7** to provide commands thereto.

The sensory system **15** comprises a current sensor (not shown) associated with the electric actuator of the brewing assembly **2** and outputting an electrical output indicative of an electric current absorbed by the electric actuator **14** of the brewing assembly **2** during the various closing and opening phases of the brewing chamber and indicative of, among other things, the effort made by the electric actuator **14** to compress the ground coffee contained in the brewing chamber **11** of the brewing assembly **2** and, consequently, of the amount of ground coffee that is compressed in the brewing chamber **11.**

The electronic control unit **17** comprises, or is externally associated with, a memory containing a software designed to cause, when executed by the electronic control unit **17,** to cause the latter to become configured to control operation of the grinder **3** to cause the latter to dispense a predetermined amount of ground coffee, in the manner described below in detail.

In particular, the electronic control unit **17** is configured to compute a coffee bean grinding time for which the grinder **3** is to be operated in a coffee beverage preparation cycle in order to produce an amount of ground coffee necessary for producing a selected coffee beverage, as well as to control the grinder **3** accordingly.

The coffee bean grinding time for which the grinder **3** is to be operated in a coffee beverage preparation cycle can be computed either at the end of each previous coffee beverage preparation cycle or only at the end of some of the previous coffee beverage dispensing cycles, so that, when the electronic control unit **17** detects a shortage or an excess of ground coffee with respect to a nominal amount, it is possible to intervene on the grinder **3** to modify the amount of ground coffee supplied to the brewing chamber **11** of the brewing assembly **2** at the next brewing cycle, thus obtaining an automatic adjustment of the amount of ground coffee by weight.

For example, if, in a coffee beverage preparation cycle, the amount of ground coffee compressed in the brewing chamber **11** is excessive with respect to the nominal amount expected for the selected coffee beverage, the amount of ground coffee can be reduced at the next coffee beverage preparation cycle by means of a suitable control of the grinder **3.** Vice versa, if, in a coffee beverage preparation cycle, the amount of ground coffee is smaller than the nominal amount expected for the selected coffee beverage, a greater amount of ground coffee can be dispensed at the next coffee beverage preparation cycle.

The best operation is achieved when the coffee bean grinding time for the next coffee beverage preparation cycle is computed at the end of each coffee beverage preparation cycle. However, this is not strictly necessary. Indeed, when the automatic coffee machine **1** performs beverage dispensing cycles with a relatively high frequency with respect to the speed with which the factors that affect the correlation between the amount of ground coffee and the number of revolutions of the grinder **3** can vary, the coffee bean grinding time could only be computed at some coffee beverage dispensing cycles, for example, at the first coffee beverage preparation cycle after a shutdown and a restart of the automatic coffee machine **1** or after an amount of time greater than a minimum interval has passed from the previous coffee beverage preparation cycle.

The electronic control unit **17** is programmed to compute the coffee bean grinding time to be used in a coffee beverage preparation cycle based on the information provided by the electric current absorbed by the electric actuator **14** of the brewing assembly **2,** which is used, instead of, as in the state of the art, to carry out a closed-loop control of the grinding time or of the number of revolutions of the electric actuator or of the mills of the grinder **3,** to compute the coffee bean grinding time based on the following general relationship:

$$T_N = f\ (T_{N-1},\ K_C \cdot \Delta\text{Current}_{N-1},\ K_F \cdot \Delta\text{Flow}_{N-1},\ K_P \cdot \Delta\text{Pump}_{N-1},\ A_N)$$

wherein:

N is an index representative of the coffee beverage preparation cycle for which the coffee bean grinding time is to be computed;

N-1 is an index representative of a previous coffee beverage preparation cycle;

f is the function that relates the coffee bean grinding time to be used in the coffee beverage preparation cycle to the quantities indicated and can take different forms, depending on the operating context, namely on the characteristics of the coffee beverage dispensing system, so as to privilege the contribution of one or more of the quantities;

$T_N$ is the coffee bean grinding time computed for the coffee beverage preparation cycle;

$T_{N-1}$ is the coffee bean grinding time used in a previous coffee beverage preparation cycle, conveniently, but not necessarily, the immediately previous coffee beverage preparation cycle;

$A_N$ is the aroma intensity level of the coffee beverage to be dispensed in the coffee beverage preparation cycle of a beverage N, which can be expressed with an adjectival identifier (very light, light, medium, strong, very strong) or a numerical identifier (1, 2, 3, 4, 5);

$\Delta\text{Current}_{N-1}$ is the difference between the electric current C absorbed by the electric actuator **14** of the brewing assembly **2** during the closing of the brewing chamber **11** in a previous coffee beverage preparation cycle, conveniently, but not necessarily, the immediately previous coffee beverage preparation cycle, in which the brewing chamber **11** was loaded with ground coffee, the electric current $C_E$ absorbed by the electric actuator **14** of the brewing assembly **2** during the closing of the brewing chamber **11** in a previous coffee beverage preparation cycle, conveniently, but not necessarily, the immediately previous coffee beverage preparation cycle, in which the brewing chamber **11** was empty, and a maximum admissible limit $C_L$ for the electric current absorbed by the electric actuator **14** of the brewing assembly **2** during the closing of the brewing chamber **11,** namely $\Delta\text{Current}_{N-1} = (C - C_E - C_L)_{N-1}$;

$\Delta\text{Flow}_{N-1}$ is the difference between the measured flow rate F of the coffee beverage dispensed at the end of a previous coffee beverage preparation cycle, conveniently, but not necessarily, the immediately previous coffee beverage preparation cycle, and a target flow rate $F_A$ of the dispensed coffee beverage, which, in turn, is computed as a function of the aroma intensity level $A_N$ of the coffee beverage to be dispensed in the coffee beverage preparation cycle, i.e. $\Delta\text{Flow}_{N-1} = (F - F_A)_{N-1}$;

$\Delta\text{Pump}_{N-1}$ is the difference between the electric power P absorbed by the water pump **7,** in terms of effective value, at the end of a previous coffee beverage preparation cycle, conveniently, but not necessarily, the coffee beverage preparation cycle of an immediately previous coffee beverage, and a target electric power $P_A$, namely $\Delta\text{Pump}_{N-1} = (P - P_A)_{N-1}$, wherein $P_A$ is conveniently computed as a function of the maximum and minimum absorbed electric powers $P_{MAX}$ and $P_{MIN}$ of the water pump **7,** for example equal to the average value between the two, namely $P_A = (P_{MAX} - P_{MIN})/2$, wherein $P_{MIN}$ is a value of a low absorbed electric power other than zero that is still able to operate the water pump **7** correctly, causing it to generate an appreciable water flow;

$K_C$ is a corrective coefficient for the torque of the electric actuator **14** of the brewing assembly **2;**

$K_F$ is a corrective coefficient for the measured flow rate of the dispensed beverage; and

$K_P$ is a corrective coefficient for the measured absorbed electric power of the water pump **7**.

The electric power P absorbed by the water pump **7** at the end of a previous coffee beverage preparation cycle is computed based on the operating time of the water pump **7** with respect to a period of the AC supply voltage thereof, modulating the start of its operation with an appropriate delay with respect to the start of each half-wave of the AC supply voltage thereof, variable from zero to the duration of the half-period.

The electronic control unit **17** is configured to compute the coffee bean grinding time $T_N$ to be used in a coffee beverage preparation cycle by implementing the following operations:

- computing $\Delta Current_{N-1} = (C - C_E - C_L)_{N-1}$;
- checking if $\Delta Current_{N-1}$ satisfies a given condition, which is conveniently, though not necessarily, defined by the condition if $\Delta Current_{N-1}$ is smaller than 0;
- if $\Delta Current_{N-1} \geq 0$, computing the coffee bean grinding time $T_N$ based on the following relationship based on a weighted sum:

$$T_N = T_{N-1} + K_C \cdot \Delta Current_{N-1}$$

- if $\Delta Current_{N-1} < 0$, computing the coffee bean grinding time $T_N$ based on one of the following relationships based on a weighted sum, which can conveniently, but not necessarily, be used in different operating contexts:

  • in a first operating context:

$$T_N = T_{N-1} + K_F \cdot \Delta Flow_{N-1} + K_P \cdot \Delta Pump_{N-1}$$

  • in a second operating context:

$$T_N = T_{N-1} + (K_F \cdot \Delta Flow_{N-1})_{only\ if\ <\ 0} + (K_P \cdot \Delta Pump_{N-1})_{only\ if\ <\ 0} + K_C \cdot \Delta Current_{N-1}$$

The aroma intensity level $A_N$ of the coffee beverage to be dispensed in the coffee beverage preparation cycle affects the computation of the coffee bean grinding time not only, as previously mentioned, through the flow rate $F_A$ of the coffee beverage, which, as mentioned above, is computed as a function of the aroma intensity level $A_N$ of the coffee beverage to be dispensed in the coffee beverage preparation cycle, but also through a multiplication factor $K_{AN}$ for the aroma level to be applied to the coffee bean grinding time $T_N$ computed in the previously described manner, namely according to the following formula:

$$T_{AN} = T_N \cdot K_{AN}$$

In a different embodiment, which can be used for example when one wants to give greater weight to the contribution $\Delta Flow_{N-1}$ of the flow rate F, the electronic control unit **17** is configured to compute the coffee bean grinding time $T_N$ when $\Delta Current_{N-1} < 0$ based on a relationship in which the contribution $\Delta Flow_{N-1}$ of the flow rate F is considered, instead of through a linear function, through a quadratic function, namely through the following relationships:

• in a first operating context:

$$T_N = T_{N-1} + (K_F \cdot \Delta Flow_{N-1}^2 \cdot sgn(\Delta Flow_{N-1})) + K_P \cdot \Delta Pump_{N-1}$$

• in a second operating context:

$$T_N = T_{N-1} + (K_F \cdot \Delta Flow_{N-1}^2 \cdot sgn(\Delta Flow_{N-1}))_{only\ if\ <\ 0} + (K_P \cdot \Delta Pump_{N-1})_{only\ if\ <\ 0} + K_C \cdot \Delta Current_{N-1}$$

With regard to the two application contexts mentioned above, the first one is an operating context in which the ground coffee in the brewing chamber actually acts as an element that generates the main pressure drop (e.g. > 5 bar) and, therefore, in a defined volume, a weight variation thereof actively affects the flow rate of the dispensed coffee beverage, the contributions of the flow rate of the dispensed coffee beverage or of the electric power of the water pump necessary to maintain the flow rate of the desired coffee beverage can be considered as primary factors for the adjustment of the grinding time. In this operating scenario, the torque of the electric actuator of the brewing assembly 2 will be considered as a limit threshold not to be exceeded so as not to overload the brewing chamber and will be unique regardless of the selected aroma, but within this limit threshold it will be the adjustment carried out as a function of the corrections of the coffee beverage flow rate and of the electric power absorbed by the water pump that will be used recalculate the grinding time.

This operating context occurs, for example, in the moment in which the grind size is sufficiently fine (300-500 $\mu$m) and in the absence of the back-pressure valve at the outlet of the brewing assembly **2** or, in any case, in the presence of a back-pressure valve having a spring with low stiffness (for example, such that the opening pressure is not greater than 4 bar). By so doing, operating conditions are obtained such that a variation of the amount of ground coffee (which is proportional to the grinding time) directly affects the flow rate of the coffee beverage and is necessary to maintain the desired flow rate of the coffee beverage (if it is specified). If, on the other hand, one opts for a dispensing of the coffee beverage with a maximum electric power of the water pump, this last factor is not to be considered.

On the contrary, the second operating context is an operating context in which the ground coffee does not generate the main pressure drop, namely the value of the flow rate of the dispensed coffee beverage is mainly determined by the back-pressure valve at the outlet of the brewing assembly **2** (for example, due to a high stiffness value of the spring of the back-pressure valve, such that the opening pressure is greater than 6 bar; or in the presence of a grind size > 500 $\mu$m), or a target flow rate $F_A$ of the dispensed beverage is not specified (contribution of the flow rate factor not considered), or still the dispensing of the selected beverage occurs with full pump power (contribution of the pump power factor not considered).

A variation of the amount of ground coffee has little effect on the flow rate of the coffee beverage and it is preferable to adjust the grinding time as a feedback of the torque of the electric actuator of the brewing assembly **2**. The electric current limit threshold will be valued as a function of the selected aroma and will be the main contribution to the adjustment of the grinding time.

In this case, if present, the correction factors represented by the flow rate of the coffee beverage or by the electric power absorbed by the water pump help adjust the grinding time. For example, in case the flow rates of the dispensed coffee beverage are too low due to too small grind sizes, for example < 300 $\mu$m, the negative contribution of the correction represented by the factor of the flow rate of the coffee beverage would help correct the grinding time in a decreasing manner, causing the dispensing of the beverage to have lower pressure levels and, hence, a higher flow rate. In this case, the contributions related to the flow rate of the coffee beverage or to the electric power absorbed by the water pump help limit the contribution of the torque of the electric actuator of the brewing assembly **2** and in this limiting perspective it would not make sense to consider positive contributions, which is why they are considered only if they are negative.

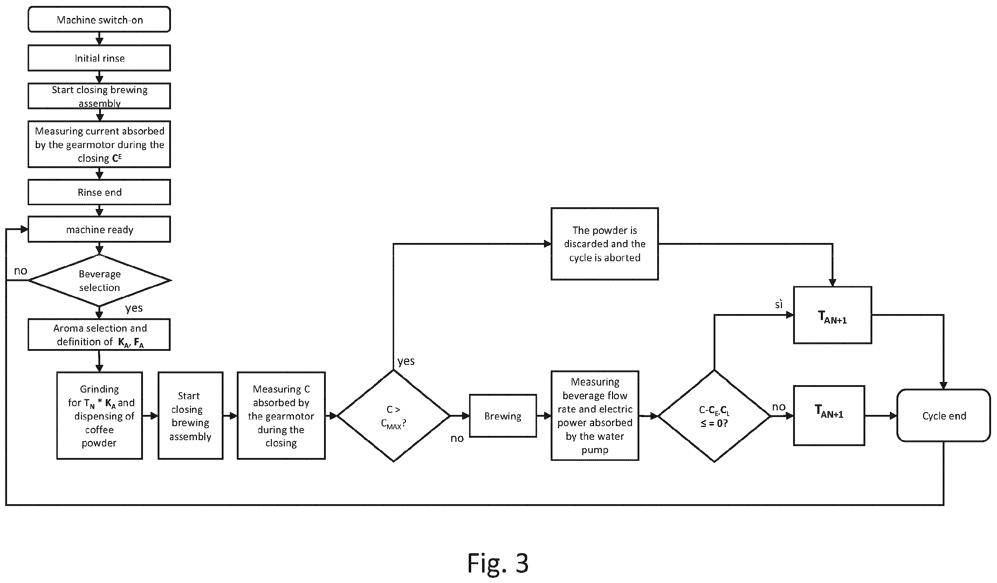

Figure 3 shows a flowchart of the operation of the automatic coffee machine **1** under the control of the electronic control unit **17**.

As shown in Figure 3, after switching on the automatic coffee machine **1,** an initial rinse is started and the electric actuator **14** of the brewing assembly **2** is operated to start closing the brewing chamber **11** of the brewing assembly **2** and the electric current $C_E$ absorbed by the electric actuator **14** of the brewing assembly **2** during the closing of the empty brewing chamber **11.**

Once the initial rinse is finished, the electric actuator **14** of the brewing assembly **2** is operated to start the opening of the brewing chamber **11** of the brewing assembly **2** and the automatic coffee machine **1** is then ready for the production and dispensing of a coffee beverage and awaits the selection of a coffee beverage by a consumer.

Once the selection of a beverage and of the aroma intensity level $A_N$ of the coffee beverage to be dispensed has been received, the target flow rate $F_A$ of the coffee beverage to be dispensed, the multiplication factor $K_A$ and the grinding time $T_{AN-1}$, which is equal to the grinding time $T_{N-1}$ used in the previous coffee beverage preparation cycle and computed in the previously described manner, are determined.

The electric actuator of the grinder **3** is then operated to start grinding the coffee beans for the computed grinding time $T_{AN-1}$ and the ground coffee obtained following grinding is supplied to the brewing assembly **2.**

After that, the electric actuator **14** of the brewing assembly **2** is operated to start closing the brewing chamber **11** of the brewing assembly **2** and the electric current absorbed by the electric actuator **14** of the brewing assembly **2** during the closing of the brewing chamber **11** is measured.

The electric current C absorbed by the electric actuator **14** of the brewing assembly **2** during the closing of the brewing chamber **11** is then compared with a maximum closing threshold $C_{MAX}$:

- if the electric current absorbed by the electric actuator **14** of the brewing assembly **2** during the closing of the brewing chamber **11** exceeds the maximum closing threshold $C_{MAX}$, then the ground coffee in the brewing chamber **11** is discharged therefrom and the brewing cycle of the selected beverage is aborted,
- if, instead, the electric current absorbed by the electric actuator **14** of the brewing assembly **2** during the closing of the brewing chamber **11** is lower than the maximum closing threshold $C_{MAX}$, then the brewing cycle of the ground coffee in the brewing chamber **11** with pressurized hot water under is started and at the end of the brewing cycle the measured flow rate F of the dispensed coffee beverage and the absorbed electric power P of the water pump 7 are measured.

Then, $\Delta\text{Current}_{N-1} = (C - C_E - C_L)_{N-1}$ is calculated, it is checked whether $\Delta\text{Current}_{N-1}$ is greater or smaller than 0 and, finally, the coffee bean grinding time $T_{AN}$ used in the following beverage dispensing cycle is calculated using the corresponding relationships indicated above, based on the outcome of the check and on the operating context.

**Claims**

1. An automatic beverage preparation machine **(1)** comprising:

   - a brewing assembly **(2)** comprising a brewing chamber **(11)** designed to contain a dose of a ground product and an electric actuator operable to cause the brewing chamber **(11)** to be opened and closed;
   - a grinder **(3)** comprising an electric actuator operable to cause a product to be ground to produce a ground product;
   - a hydraulic circuit **(4)** to supply water to the brewing assembly **(2)** to prepare a beverage from the ground product in the brewing chamber **(11)** and comprising a water pump **(7)** and a water flow meter **(5)** to measure a quantity of water supplied by the water pump **(7)**;
   - a sensory system **(15)** to sense, and output an output indicative of, different operation quantities of the automatic beverage preparation machine **(1)** and comprising an electric current C absorbed by the electric actuator **(14)** of the brewing assembly **(2)**, a flow rate F of the beverage dispensed and an electric power P absorbed by the water pump **(7)**;
   - a user interface **(16)** to allow a consumer to request a beverage to be dispensed; and
   - an electronic control unit **(17)** designed to interface with the sensory system **(15)** and the user interface **(16)** to receive outputs thereof and with the brewing assembly **(2)**, the grinder **(3)** and the water pump **(7)** to provide commands thereto;

   the electronic control unit **(17)** is further designed to compute a product grinding time $T_N$ for which the grinder **(3)** is to be operated in a beverage preparation cycle to produce a dose of ground product necessary to produce a selected beverage, and to control the grinder (3) accordingly;
   the electronic control unit **(17)** is further designed to compute the product grinding time $T_N$ for which the grinder **(3)** is to be operated in a beverage preparation cycle based on the following quantities:

   - a product grinding time $T_{N-1}$ used in a previous beverage preparation cycle; and
   - an electric current C absorbed by the electric actuator **(14)** of the brewing assembly **(2)** during closing of the infusion chamber **(11)** in a previous beverage preparation cycle in which the brewing chamber **(11)** was loaded with ground product;

   **characterised in that** the electronic control unit **(17)** is further designed to compute $T_N$ also based on one or more of the following quantities:

   - a flow rate F of the beverage dispensed measured at the end of a previous beverage preparation cycle; and
   - an electric power P absorbed by the water pump **(7)** at the end of a previous beverage preparation cycle.

2. The automatic beverage preparation machine **(1)** of claim **1,** wherein the electronic control unit **(17)** is further designed to compute $T_N$ based on the following quantities:

   - a difference $\Delta\text{Current}_{N-1}$ between electric currents C and $C_E$ absorbed by the electric actuator **(14)** of the brewing assembly **(2)** during closing of the brewing chamber **(11)** in respective previous beverage preparation cycles in which the brewing chamber **(11)** was loaded with and, respectively, empty of ground product, and a maximum admissible limit $C_L$ for an electric current absorbed by the electric actuator **(14)** of the brewing assembly **(2)** during closing of the brewing chamber **(11)**;
   - a difference $\Delta\text{Flow}_{N-1}$ between a measured flow rate F of the beverage dispensed at the end of a previous beverage preparation cycle and a target flow rate $F_A$ of the dispensed beverage; and
   - a difference $\Delta\text{Pump}_{N-1}$ between an electric power P absorbed by the water pump **(7)** at the end of a previous beverage preparation cycle and a target electric power $P_A$ absorbed by the water pump **(7)**.

3. The automatic beverage preparation machine **(1)** of claim **2,** wherein the electronic control unit **(17)** is further designed to compute $T_N$ implementing the following operations:

- compute $\Delta Current_{N-1} = (C - C_E - C_L)_{N-1}$;
- check if $\Delta Current_{N-1}$ satisfies a specific operating condition, conveniently defined by $\Delta Current_{N-1}$ being higher than or equal to 0;
- if $\Delta Current_{N-1}$ is determined to satisfy the specific operating condition, compute $T_N$ based on $T_{N-1}$ and $\Delta Current_{N-1}$; and
- if $\Delta Current_{N-1}$ is determined to fail to satisfy the specific operating condition, compute $T_N$ based on $T_N$, $\Delta Current_{N-1}$, $\Delta Flow_{N-1}$ $\Delta Pump_{N-1}$.

4. The automatic beverage preparation machine **(1)** of claim **3,** wherein the electronic control unit **(17)** is further designed to compute $T_N$ based on a weighted sum of $T_{N-1}$, $\Delta Current_{N-1}$, $\Delta Flow_{N-1}$ and $\Delta Pump_{N-1}$.

5. The automatic beverage preparation machine **(1)** of claim **4,** wherein the electronic control unit **(17)** is further designed to compute $T_N$ based on the following relationships:

- if $\Delta Current_{N-1}$ is determined to satisfy the specific operating condition

$$T_N = T_{N-1} + K_C \cdot \Delta Current_{N-1}$$

- if $\Delta Current_{N-1}$ is determined to fail to satisfy the specific operating condition:

• in a first operating context:

$$T_N = T_{N-1} + K_F \cdot \Delta Flow_{N-1} + K_P \cdot \Delta Pump_{N-1}$$

or

$$T_N = T_{N-1} + (K_F \cdot \Delta Flow_{N-1}{}^2 \cdot sgn(\Delta Flow_{N-1})) + K_P \cdot \Delta Pump_{N-1}$$

• in a second operating context:

$$T_N = T_{N-1} + (K_F \cdot \Delta Flow_{N-1})_{only\ if\ <\ 0} + (K_P \cdot \Delta Pump_{N-1})_{only\ if\ <\ 0} + K_C \cdot \Delta Current_{N-1}$$

or

$$T_N = T_{N-1} + (K_F \cdot \Delta Flow_{N-1}{}^2 \cdot sgn(\Delta Flow_{N-1}))_{only\ if\ <\ 0} + (K_P \cdot \Delta Pump_{N-1})_{only\ if\ <\ 0} + K_C \cdot \Delta Current_{N-1}$$

6. The automatic beverage preparation machine **(1)** of claim **1,** wherein the electronic control unit **(17)** is further designed to compute a product grinding time $T_{AN}$ for which the grinder **(3)** is to be operated in a beverage preparation cycle also based on an aroma intensity level $A_N$ of the beverage to be dispensed in a beverage preparation cycle.

7. The automatic beverage preparation machine **(1)** of claim **6,** wherein the electronic control unit **(17)** is further designed to compute $T_{AN}$ according to the following formula: $T_{AN} = T_N \cdot K_{AN}$, wherein $K_{AN}$ is a multiplication factor to be applied to $T_N$ as a function of the aroma intensity level $A_N$ of the beverage to be dispensed in the beverage preparation cycle.

8. The automatic beverage preparation machine **(1)** of claim **6** or **7,** when dependent on claim **2,** wherein $F_A$ is a function of $A_N$.

9. The automatic beverage preparation machine **(1)** of claim **1,** wherein the electronic control unit **(17)** is further designed to:

- compare C with a maximum closing threshold $C_{MAX}$;
- if C is determined to exceed $C_{MAX}$, cause the ground product in the brewing chamber **(11)** to be discarded and the beverage preparation cycle to be aborted;
if C is determined to be lower than $C_{MAX}$, cause brewing of the ground product in the brewing chamber **(11)** with pressurised hot water to be started; and
- measure F and P at the end of the brewing.

10. A computer program loadable in, and executable by, the electronic control unit **(17)** of the automatic beverage preparation machine **(1)** of claim **1** and designed to cause, when executed, the electronic control unit **(17)** to become configured as claimed in claim **1**.

**Patentansprüche**

1. Getränkezubereitungsautomat **(1),** umfassend:

   - eine Brühbaugruppe **(2),** umfassend eine Brühkammer **(11),** die dazu ausgelegt ist, eine Dosis eines gemahlenen Produkts zu enthalten, und einen elektrischen Aktuator, der betreibbar ist, um zu bewirken, dass die Brühkammer **(11)** geöffnet und geschlossen wird;
   - eine Mühle **(3),** die einen elektrischen Aktuator umfasst, der betreibbar ist, um zu bewirken, dass ein zu mahlendes Produkt gemahlen wird, um ein gemahlenes Produkt herzustellen;
   - einen Hydraulikkreislauf **(4),** um der Brühbaugruppe **(2)** Wasser zuzuführen, um ein Getränk aus dem gemahlenen Produkt in der Brühkammer **(11)** zuzubereiten und umfassend eine Wasserpumpe **(7)** und einen Wasserdurchflussmesser **(5)** zum Messen einer von der Wasserpumpe **(7)** zugeführten Wassermenge;
   - ein Sensorsystem **(15)** zum Erfassen und Ausgeben einer Ausgabe, die verschiedene Betriebsgrößen des Getränkezubereitungsautomaten **(1)** anzeigt und umfassend einen elektrischen Strom C, der von dem elektrischen Aktuator **(14)** der Brühbaugruppe **(2)** aufgenommen wurde, eine Durchflussrate F des abgegebenen Getränks und eine elektrische Leistung P, die von der Wasserpumpe **(7)** aufgenommen wurde;
   - eine Benutzerschnittstelle **(16),** die es einem Verbraucher ermöglicht, die Abgabe eines Getränks anzufordern; und
   - eine elektronische Steuereinheit **(17),** die so ausgelegt ist, dass sie mit dem Sensorsystem **(15)** und der Benutzerschnittstelle **(16),** um Ausgaben davon zu empfangen, und mit der Brühbaugruppe **(2),** der Mühle **(3)** und der Wasserpumpe **(7)** verbunden ist, um Befehle dafür bereitzustellen;

   die elektronische Steuereinheit **(17)** ferner dazu ausgelegt ist, eine Produktmahlzeit $T_N$ zu berechnen, für die die Mühle **(3)** in einem Getränkezubereitungszyklus betrieben werden soll, um eine Dosis gemahlenes Produkt herzustellen, die zur Herstellung eines ausgewählten Getränks erforderlich ist, und die Mühle **(3)** entsprechend zu steuern;
   die elektronische Steuereinheit **(17)** ist ferner dazu ausgelegt, die Produktmahlzeit $T_N$ zu berechnen, für die die Mühle **(3)** in einem Getränkezubereitungszyklus auf der Grundlage der folgenden Größen betrieben werden soll:

   - eine Produktmahlzeit $T_{N-1}$, die in einem vorherigen Getränkezubereitungszyklus verwendet wurde; und
   - ein elektrischer Strom C, der von dem elektrischen Aktuator **(14)** der Brühbaugruppe **(2)** während des Schließens der Brühkammer **(11)** in einem vorherigen Getränkezubereitungszyklus aufgenommen wurde, in dem die Brühkammer **(11)** mit gemahlenem Produkt beladen wurde;

   **dadurch gekennzeichnet, dass** die elektronische Steuereinheit **(17)** ferner dazu ausgelegt ist, $T_N$ auch auf der Grundlage einer oder mehrerer der folgenden Größen zu berechnen:

   - eine Durchflussrate F des abgegebenen Getränks, gemessen am Ende eines vorherigen Getränkezubereitungszyklus; und
   - eine elektrische Leistung P, die von der Wasserpumpe **(7)** am Ende eines vorherigen Getränkezubereitungszyklus aufgenommen wurde.

2. Getränkezubereitungsautomat **(1)** nach Anspruch **1,** wobei die elektronische Steuereinheit **(17)** ferner dazu ausgelegt ist, $T_N$ auf der Grundlage der folgenden Größen zu berechnen:

   - eine Differenz $\Delta Strom_{N-1}$ zwischen elektrischen Strömen C und $C_E$, die vom elektrischen Aktuator **(14)** der Brühbaugruppe **(2)** während des Schließens der Brühkammer **(11)** in jeweiligen vorherigen Getränkezubereitungszyklen aufgenommen wurden, in denen die Brühkammer **(11)** mit gemahlenem Produkt beladen bzw.

entleert wurde, und eine maximal zulässige Grenze $C_L$ für einen elektrischen Strom, der vom elektrischen Aktuator **(14)** der Brühbaugruppe **(2)** während des Schließens der Brühkammer **(11)** aufgenommen wurde;
- eine Differenz $\Delta$Strömung$_{N-1}$ zwischen einer gemessenen Durchflussrate F des abgegebenen Getränk am Ende eines vorherigen Getränkezubereitungszyklus und einer Zieldurchflussrate $F_A$ des abgegebenen Getränks; und
- eine Differenz $\Delta$Pumpe$_{N-1}$ zwischen einer von der Wasserpumpe **(7)** am Ende eines vorherigen Getränkezubereitungszyklus aufgenommenen elektrischen Leistung P und einer von der Wasserpumpe **(7)** aufgenommenen elektrischen Zielleistung $P_A$.

3. Getränkezubereitungsautomat **(1)** nach Anspruch **2,** wobei die elektronische Steuereinheit **(17)** ferner dazu ausgelegt ist, $T_N$ zu berechnen, indem die folgenden Vorgänge implementiert werden:

- Berechnen von $\Delta$Strom$_{N-1}$ = (C - $C_E$ - $C_L$)$_{N-1}$;
- Überprüfen, ob $\Delta$Strom$_{N-1}$ eine bestimmte Betriebsbedingung erfüllt, die zweckmäßigerweise dadurch definiert ist, dass $\Delta$Strom$_{N-1}$ größer oder gleich 0 ist;
- wenn festgestellt wird, dass $\Delta$Strom$_{N-1}$ die spezifische Betriebsbedingung erfüllt, Berechnen von $T_N$ auf Grundlage von $T_{N-1}$ und $\Delta$Strom$_{N-1}$; und
- wenn festgestellt wird, dass $\Delta$Strom$_{N-1}$ die spezifische Betriebsbedingung nicht erfüllt, Berechnen von $T_N$ auf der Grundlage von $T_N$, $\Delta$Strom$_{N-1}$, $\Delta$Strömung$_{N-1}$ $\Delta$Pumpe$_{N-1}$.

4. Getränkezubereitungsautomat **(1)** nach Anspruch **3,** wobei die elektronische Steuereinheit **(17)** ferner dazu ausgelegt ist, $T_N$ auf Grundlage einer gewichteten Summe von $T_{N-1}$, $\Delta$Strom$_{N-1}$, $\Delta$Strömung$_{N-1}$ und $\Delta$Pumpe$_{N-1}$ zu berechnen.

5. Getränkezubereitungsautomat ( **1)** nach Anspruch **4,** wobei die elektronische Steuereinheit **(17)** ferner dazu ausgelegt ist, $T_N$ auf der Grundlage der folgenden Beziehungen zu berechnen:

- wenn festgestellt wird, dass $\Delta$Strom$_{N-1}$ die spezifische Betriebsbedingung erfüllt $T_N = T_{N-1} + K_C \cdot \Delta$Strom$_{N-1}$
- wenn festgestellt wird, dass $\Delta$Strom$_{N-1}$ die spezifische Betriebsbedingung nicht erfüllt:

• in einem ersten Betriebskontext:

$$T_N = T_{N-1} + K_F \cdot \Delta\text{Strömung}_{N-1} + K_P \cdot \Delta\text{Pumpe}_{N-1}$$

oder

$$T_N = T_{N-1} + (K_F \cdot \Delta\text{Strömung}_{N-1}^2 \cdot \text{sgn}(\Delta\text{Strömung}_{N-1})) + K_P$$

$$\cdot \Delta\text{Pumpe}_{N-1}$$

• in einem zweiten Betriebskontext:

$$T_N = T_{N-1} + (K_F \cdot \Delta\text{Strömung}_{N-1}) \text{ nur wenn} < 0 + (K_P \cdot$$

$$\Delta\text{Pumpe}_{N-1}) \text{ nur wenn} < 0 + K_C \cdot \Delta\text{Strom}_{N-1}$$

oder

$$T_N = T_{N-1} + (K_F \cdot \Delta \text{Strömung}_{N-1}^2 \cdot \text{sgn}(\Delta \text{Strömung}_{N-1}))$$

$$\text{nur wenn} < 0 + (K_P \cdot \Delta \text{Pumpe}_{N-1}) \text{ nur wenn} < 0 + K_C \cdot$$

$$\Delta \text{Strom}_{N-1}$$

6. Getränkezubereitungsautomat (1) nach Anspruch **1,** wobei die elektronische Steuereinheit (17) ferner dazu ausgelegt ist, eine Produktmahlzeit $T_{AN}$ zu berechnen, für die die Mühle (3) in einem Getränkezubereitungszyklus ebenfalls auf der Grundlage eines Aromaintensitätsniveaus $_A$N des in einem Getränkezubereitungszyklus abzugebenden Getränks betrieben werden soll.

7. Getränkezubereitungsautomat ( **1)** nach Anspruch **6,** wobei die elektronische Steuereinheit **(17)** ferner dazu ausgelegt ist, $T_{AN}$ gemäß der folgenden Formel zu berechnen: $T_{AN} = T_N \cdot K_{AN}$, wobei $K_{AN}$ ein Multiplikationsfaktor ist, der auf $T_N$ als Funktion des Aromaintensitätsniveaus $A_N$ des im Getränkezubereitungszyklus abzugebenden Getränks anzuwenden ist.

8. Getränkezubereitungsautomat ( **1)** nach Anspruch **6** oder **7,** wenn abhängig von Anspruch **2,** wobei $F_A$ eine Funktion von $A_N$ ist.

9. Getränkezubereitungsautomat ( **1)** nach Anspruch **1,** wobei die elektronische Steuereinheit (17) ferner ausgelegt ist, um:

   - C mit einer maximalen Schließschwelle $C_{MAX}$ zu vergleichen;
   - wenn festgestellt wird, dass C $C_{MAX}$ überschreitet, zu veranlassen, dass das gemahlene Produkt in der Brühkammer **(11)** verworfen und der Getränkezubereitungszyklus abgebrochen wird;
   wenn festgestellt wird, dass C niedriger als $C_{MAX}$ ist, zu veranlassen, dass das Aufbrühen des gemahlenen Produkts in der Brühkammer **(11)** mit unter Druck stehendem Heißwasser gestartet wird; und
   - F und P am Ende des Brühvorgangs zu messen.

10. Computerprogramm, das in die elektronische Steuereinheit **(17)** des Getränkezubereitungsautomaten **(1)** des Anspruchs **1** geladen werden kann und von dieser ausgeführt werden kann und so ausgelegt ist, dass es bei Ausführung bewirkt, dass die elektronische Steuereinheit **(17)** wie in Anspruch **1** beansprucht konfiguriert wird.

**Revendications**

1. Machine de préparation de boissons automatique **(1)** comprenant :

   - un ensemble de brassage **(2)** comprenant une chambre de brassage **(11)** conçue pour contenir une dose d'un produit moulu et un actionneur électrique pouvant fonctionner pour provoquer l'ouverture et la fermeture de la chambre de brassage **(11)** ;
   - un broyeur **(3)** comprenant un actionneur électrique pouvant fonctionner pour amener un produit à être broyé pour produire un produit broyé ;
   - un circuit hydraulique **(4)** pour alimenter en eau l'ensemble de brassage **(2)** afin de préparer une boisson à partir du produit moulu dans la chambre de brassage **(11)** et comprenant une pompe à eau **(7)** et un compteur d'eau **(5)** pour mesurer une quantité d'eau fournie par la pompe à eau **(7)** ;
   - un système de détection **(15)** pour détecter et produire une sortie indiquant différentes quantités de fonctionnement de la machine de préparation de boissons automatique **(1)** et comprenant un courant électrique C absorbé par l'actionneur électrique **(14)** de l'ensemble de brassage **(2),** un débit F de la boisson distribuée et une puissance électrique P absorbée par la pompe à eau **(7)** ;
   - une interface utilisateur **(16)** pour permettre à un consommateur de demander la distribution d'une boisson ; et
   - une unité de commande électronique **(17)** conçue pour s'interfacer avec le système de détection **(15)** et l'interface utilisateur **(16)** afin d'en recevoir les sorties et avec l'ensemble de brassage **(2),** le broyeur **(3)** et la pompe à eau **(7)** afin de leur fournir des commandes ;

   l'unité de commande électronique **(17)** est en outre conçue pour calculer une durée $T_N$ de broyage du produit pendant laquelle le broyeur **(3)** doit fonctionner dans un cycle de préparation de boisson pour produire une dose de produit broyé nécessaire à la production d'une boisson sélectionnée, et pour commander le broyeur **(3)** en conséquence ;

l'unité de commande électronique **(17)** est en outre conçue pour calculer la durée $T_N$ de broyage du produit pendant laquelle le broyeur **(3)** doit fonctionner dans un cycle de préparation de boisson, sur la base des quantités suivantes :

- une durée $T_{N-1}$ de broyage du produit utilisée lors d'un cycle précédent de préparation de boisson ; et
- un courant électrique C absorbé par l'actionneur électrique **(14)** de l'ensemble de brassage **(2)** pendant la fermeture de la chambre d'infusion **(11)** au cours d'un cycle de préparation de boisson précédent dans lequel la chambre d'infusion **(11)** était chargée de produit moulu ;

**caractérisée en ce que** l'unité de commande électronique **(17)** est en outre conçue pour calculer $T_N$ également sur la base d'une ou de plusieurs des quantités suivantes :

- un débit F de la boisson distribuée, mesuré à la fin d'un cycle précédent de préparation de boisson ; et
- une puissance électrique P absorbée par la pompe à eau **(7)** à la fin d'un cycle de préparation de boisson précédent.

2. Machine de préparation de boissons automatique **(1)** selon la revendication **1,** l'unité de commande électronique **(17)** étant en outre conçue pour calculer $T_N$ sur la base des quantités suivantes :

- une différence $\Delta Current_{N-1}$ entre les courants électriques C et $C_E$ absorbés par l'actionneur électrique **(14)** de l'ensemble de brassage **(2)** pendant la fermeture de la chambre de brassage **(11)** au cours des cycles de préparation de boissons précédents respectifs dans lesquels la chambre de brassage **(11)** était chargée et, respectivement, sans produit moulu, et une limite maximale admissible $C_L$ pour un courant électrique absorbé par l'actionneur électrique **(14)** de l'ensemble de brassage **(2)** pendant la fermeture de la chambre de brassage **(11)** ;
- une différence $\Delta Flow_{N-1}$ entre un débit mesuré F de la boisson distribuée à la fin d'un cycle de préparation précédent et un débit cible $F_A$ de la boisson distribuée ; et
- une différence $\Delta Pump_{N-1}$ entre une puissance électrique P absorbée par la pompe à eau **(7)** à la fin d'un cycle de préparation de boisson précédent et une puissance électrique cible $P_A$ absorbée par la pompe à eau **(7).**

3. Machine de préparation de boissons automatique **(1)** selon la revendication **2,** l'unité de commande électronique **(17)** étant en outre conçue pour calculer $T_N$ en mettant en œuvre les opérations suivantes :

- le calcul de $\Delta Current_{N-1} = (C - C_E - C_L)_{N-1}$ ;
- la vérification si $\Delta Current_{N-1}$ satisfait une condition de fonctionnement spécifique, définie de manière pratique par $\Delta Current_{N-1}$ étant supérieur ou égal à 0 ;
- s'il est déterminé que $\Delta Current_{N-1}$ satisfait la condition de fonctionnement spécifique, calculer $T_N$ sur la base de $T_{N-1}$ et de $\Delta Current_{N-1}$ ; et
- s'il est déterminé que $\Delta Current_{N-1}$ ne satisfait pas la condition de fonctionnement spécifique, calculer $T_N$ sur la base de $T_N$, $\Delta Current_{N-1}$, $\Delta Flow_{N-1}$ $\Delta Pump_{N-1}$.

4. Machine de préparation de boissons automatique (1) selon la revendication **3,** l'unité de commande électronique **(17)** étant en outre conçue pour calculer $T_N$ sur la base d'une somme pondérée de $T_{N-1}$, $\Delta Current_{N-1}$, $\Delta Flow_{N-1}$ et $\Delta Pump_{N-1}$.

5. Machine de préparation de boissons automatique **(1)** selon la revendication **4,** l'unité de commande électronique **(17)** étant en outre conçue pour calculer $T_N$ sur la base des relations suivantes :

- si $\Delta Current_{N-1}$ est déterminé pour satisfaire la condition de fonctionnement spécifique

$$T_N = T_{N-1} + K_C \cdot \Delta Current_{N-1}$$

- s'il est déterminé que $\Delta Current_{N-1}$ ne satisfait pas la condition de fonctionnement spécifique :

• dans un premier contexte de fonctionnement :

$$T_N = T_{N-1} + K_F \cdot \Delta Flow_{N-1} + K_P \cdot \Delta Pump_{N-1}$$

ou

$$T_N = T_{N-1} + (K_F \cdot \Delta Flow_{N-1}^2 \cdot sgn(\Delta Flow_{N-1})) + K_P \cdot$$
$$\Delta Pump_{N-1}$$

• dans un second contexte de fonctionnement :

$$T_N = T_{N-1} + (K_F \cdot \Delta Flow_{N-1}) \text{ seulement si} < 0 + (K_P \cdot$$
$$\Delta Pump_{N-1}) \text{ seulement si} < 0 + K_C \cdot \Delta Current_{N-1}$$

ou

$$T_N = T_{N-1} + (K_F \cdot \Delta Flow_{N-1}^2 \cdot sgn(\Delta Flow_{N-1}))$$
$$\text{seulement si} < 0 + (K_P \cdot \Delta Pump_{N-1}) \text{ seulement si} < 0 +$$
$$K_C \cdot \Delta Current_{N-1}$$

6. Machine de préparation de boissons automatique **(1)** selon la revendication **1**, l'unité de commande électronique **(17)** étant en outre conçue pour calculer une durée $T_{AN}$ de broyage de produit pendant laquelle le broyeur **(3)** doit fonctionner dans un cycle de préparation de boissons, également sur la base d'un niveau d'intensité d'arôme $A_N$ de la boisson à distribuer dans un cycle de préparation de boissons.

7. Machine de préparation de boissons automatique **(1)** selon la revendication **6**, l'unité de commande électronique **(17)** étant en outre conçue pour calculer $T_{AN}$ selon la formule suivante : $T_{AN} = T_N \cdot K_{AN}$, où $K_{AN}$ est un facteur de multiplication à appliquer à $T_N$ en fonction du niveau d'intensité d'arôme $A_N$ de la boisson à distribuer dans le cycle de préparation de la boisson.

8. Machine automatique de préparation de boissons **(1)** selon la revendication **6** ou **7,** lorsqu'elle dépend de la revendication **2,** $F_A$ étant fonction de $A_N$.

9. Machine de préparation de boissons automatique **(1)** selon la revendication **1**, l'unité de commande électronique **(17)** étant en outre conçue pour :

   - comparer C avec un seuil de fermeture maximal $C_{MAX}$ ;
   - s'il est déterminé que C dépasse $C_{MAX}$, le produit broyé dans la chambre de brassage **(11)** est jeté et le cycle de préparation de la boisson est interrompu ;
   s'il est déterminé que C est inférieur à $C_{MAX}$, démarrer le brassage du produit moulu dans la chambre de brassage **(11)** avec de l'eau chaude sous pression ; et
   - mesurer F et P à la fin du brassage.

10. Programme informatique pouvant être chargé dans l'unité de commande électronique **(17),** et exécuté par cette dernière, de la machine de préparation de boissons automatique **(1)** selon la revendication **1** et conçu pour que, lorsqu'il est exécuté, l'unité de commande électronique **(17)** adopte une configuration selon la revendication **1.**

Fig. 1

EP 4 570 142 B1

Electric actuator

Brewing chambre

Movable part

Fixed part

2

14

11

13

12

Fig. 2

Fig. 3

**EP 4 570 142 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4659023 A
- US 5492054 A
- WO 2008105017 A1
- WO 2008142536 A1
- US 2021030195 A1